# EUROPÄISCHE PATENTSCHRIFT

(11) **EP 3 594 303 B1**
(45) Veröffentlichungstag und Bekanntmachung des Hinweises auf die Patenterteilung: **22.12.2021**
(21) Anmeldenummer: 19185558.4
(22) Anmeldetag: 10.07.2019
(51) Int. Cl.: C09J 123/16, B29C 48/425, B29C 48/435, B29C 48/44, B29C 48/00, B29C 48/285, B29C 48/29, B29K 23/00, B29K 105/00, B29B 7/48, B29B 7/74

(54) **HERSTELLUNG EINER HAFTKLEBEMASSE AUF BASIS VON FESTEM EPDM-KAUTSCHUK**
PRODUCTION OF AN ADHESIVE MASS BASED ON SOLID EPDM RUBBER
FABRICATION D'UNE MASSE ADHÉSIVE À BASE DE CAOUTCHOUC SOLIDE EPDM

(30) Priorität: 12.07.2018 DE 102018211617
(43) Veröffentlichungstag der Anmeldung: 15.01.2020
(73) Patentinhaber: TESA SE, 22848 Norderstedt (DE)
(72) Erfinder: SCHUBERT, Anna, 22850 Norderstedt (DE); SCHÖNROCK, Julia, 22527 Hamburg (DE); STREBL-PFARR, Maike, 22529 Hamburg (DE)
(74) Vertreter: tesa SE

(56) Entgegenhaltungen:
- WO-A1-2017/042221
- DE-A1- 19 939 073
- DE-A1- 19 939 077
- DE-A1-102009 046 362
- DE-A1-102009 046 363
- DE-A1-102016 002 143
- US-A- 5 888 602
- US-B1- 6 780 271

## Beschreibung

Die Erfindung betrifft ein Verfahren zur kontinuierlichen und lösungsmittelfreien Herstellung einer Haftklebemasse auf Basis von festem EPDM-Kautschuk, eine nach diesem Verfahren erhältliche Haftklebemasse sowie ein Haftklebeband, das mindestens eine Schicht aus einer solchen Haftklebemasse umfasst.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruhen auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus ein oder mehreren Haftklebmasseschichten und keiner Trägerfolie bestehen, die so genannten Transfertapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen (PP), Polyethylen (PE), Polyester wie Polyethylenterephthalat oder auch aus Papier, Gewebe oder Vliesstoff.

Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Als Ethylen-Propylen-Dien-Kautschuke, Kurzzeichen EPDM-Kautschuke, abgeleitet von Ethylen-Propylen-Dien, M-Gruppe, werden mindestens terpolymere Synthesekautschuke bezeichnet, die typischerweise durch katalytische Copolymerisation von Ethylen, Propylen, einem Dien und gegebenenfalls weiteren Monomeren erhalten werden. EPDM gehört zu den Synthesekautschuken mit gesättigter Hauptkette (nach DIN: M-Gruppe). Sie besitzen dafür Doppelbindungen in den Seitenketten und sind somit leicht vernetzbar. Als Diene eignen sich nichtkonjugierte Diene, deren Doppelbindungen unterschiedliche Reaktivitäten aufweisen. Eine Doppelbindung soll bei der Polymerisation bevorzugt reagieren und in die Kette eingebaut werden, während die zweite Doppelbindung dabei möglichst inaktiv in der Seitenkette bestehen bleibt und eine ausreichend hohe Reaktivität für eine spätere Vernetzung haben soll. Der Anteil an Ethylen liegt typischerweise bei 45-75 Gew.-%.

EPDM-Kautschuke sind von einer Vielzahl von Herstellern wie zum Beispiel Exxon Mobil, Kumho und Lion Copolymers erhältlich.

Zur Einstellung anwendungsgerechter Eigenschaften können Haftklebemassen durch Zumischen von Klebharzen, Weichmachern, Vernetzern oder Füllstoffen modifiziert werden. Zwecks verbesserter Verarbeitungsfähigkeit von Kautschuken werden den Kautschuken häufig inerte Trennhilfsmittel wie Talkum, Silicate (Talk, Ton, Glimmer), Zinkstearat und PVC-Puder zugesetzt.

Üblicherweise wird eine Haftklebmasse auf Basis von festem EPDM-Kautschuk hergestellt, indem das Basispolymer und die weiteren Bestandteile wie zum Beispiel Klebharz in einem geeigneten Lösungsmittel gelöst werden, und die erhaltene Mischung mittels beispielsweise Rasterwalzenauftrag, Kommarakelbeschichtung, Mehrwalzenbeschichtung oder in einem Druckverfahren auf einen Träger oder Liner beschichtet und anschließend das Lösungsmittel in einem Trockenkanal oder -ofen entfernt wird. Nachteilig an einem solchen Lösungsmittelverfahren sind insbesondere ein begrenzter Masseauftrag sowie das aufwändige Trocknen.

Alternativ kann die Beschichtung des Trägers oder Liners auch in einem Lösungsmittelfreien Verfahren erfolgen. Hierzu wird der feste EPDM-Kautschuk mit zumindest einem Teil des zuzugebenden Klebharzes in einem Extruder erwärmt und aufgeschmolzen. In dem Extruder können weitere Prozessschritte wie das Mischen mit weiteren Bestandteilen, Filtration oder eine Entgasung erfolgen. Die Schmelze wird dann mittels eines geeigneten Auftragsverfahrens, beispielsweise unter Verwendung einer Düse oder eines Kalanders, auf den Träger oder Liner beschichtet.

Verschiedene Verfahren zur Herstellung von Haftklebemassen sind beispielsweise in der DE 693 20 359 T2, der US 2014/0011945 A1, der WO 2015/017400 A1, der EP 0 874 034 A1 oder der DE 10 2008 004 388 A1 beschrieben.

Die WO 2017/042221 A1 betrifft eine Haftklebemasse, die als Basispolymer mindestens einen oder mehrere feste EPDM- Kautschuke sowie Klebharze enthält, wobei der Anteil der Klebharze bei 30 bis 130 phr liegt, dadurch gekennzeichnet, dass die Klebemasse weichmacherfrei ist.

Die US 5 888 602 A betrifft eine Laminatnaht umfassend ein Paar teilweise überlappender Folienmaterialien, die durch eine Klebebandzusammensetzung miteinander verbunden sind umfassend:
einen ersten EPDM-Kautschuk mit einem Ethylengehalt von etwa 45 bis etwa 58 Gewichtsprozent, einem Diengehalt von etwa 2 bis etwa 12 Gewichtsprozent und einem gewichtsmittleren Molekulargewicht von etwa 50.000 bis etwa 250.000,
einen zweiten EPDM-Kautschuk mit einem Ethylengehalt von etwa 45 bis etwa 58 Gewichtsprozent, einem Diengehalt von etwa 2 bis etwa 10 Gewichtsprozent und einem gewichtsmittleren Molekulargewicht von etwa 10.000 bis etwa 30.000 Gewichtsprozent, wobei sich die Gewichtsprozente auf das Gesamtgewicht des ersten EPDM-Kautschuks bzw. des zweiten EPDM-Kautschuks beziehen,
etwa 10 Gewichtsteile bis etwa 125 Gewichtsteile eines flüssigen klebrigmachenden Polybutenpolymers und/oder mindestens eines Weichmachers, bezogen auf 100 Gewichtsteile der EPDM-Kautschuke, und
einen Härter, der entweder eine Nitrosoverbindung oder ein Oxidationsmittel zu etwa 0,1 bis etwa 2,0 Gewichtsteilen ist, mit einem Co-Härter zu etwa 0,3 bis etwa 1,5 Gewichtsteilen p-Chinondioxim, wobei sich das Gewicht auf 100 Gewichtsteile der EPDM-Kautschuke bezieht.

Die DE 10 2009 046363 A1 betrifft ein Montageklebeband für den Innenausbau aus einem Träger und einer darauf zumindest einseitig aus der Schmelze beschichteten Klebemasse, dadurch gekennzeichnet dass die Klebemasse ein Ethylen-Propylen-Kautschuk mit einer Dichte zwischen 0,86 und 0,89 g/cm³ und ein Klebharz enthält.

Die DE 10 2009 046362 A1 betrifft einen Haftklebstoff umfassend ein vernetzbares Polyolefin und mindestens ein Klebharz, worin das Polyolefin aufgebaut ist aus mindestens zwei Monomeren A und B und mindestens einem einer Vernetzung zugänglichen Comonomer C, wobei die Monomere A und B ausgewählt sind aus der Gruppe bestehend aus α-Olefinen, Vinylacetat, n-Butylacrylat und Methylmethacrylat oder im Fall von EPDM ein Dien wie 5-Ethyliden-2-norbornen, Dicyclopentadien oder 5-Vinyl-2-norbornen.

Die DE 10 2016 002 143 A1 betrifft einen Extruder, wobei das Einsatzmaterial über ein Füllteil in den Extruder eingezogen wird, wobei der Materialeinzug durch einen Planetwalzenextruderabschnitt gebildet wird, der aus einer in einem Gehäuse umlaufenden Zentralspindel und Planetspindeln besteht, wobei das Gehäuse innen verzahnt ist oder eine innen verzahnte Buchse besitzt und die Zentralspindel im Abstand umgibt und die Planetspindeln in dem Zwischenraum zwischen der Zentralspindel und dem Gehäuse um die Zentralspindel umlaufen und dabei sowohl mit der Zentralspindel als auch mit der Gehäuseinnenverzahnung kämmen, gekennzeichnet durch eine Materialzuführung, welche in Bezug auf die Mittelachse des Planetwalzenextruders exzentrisch angeordnet ist, so dass die Mittelachse der Materialzuführung im Abstand von der Mittelachse des Planetwalzenextruders an dieser Mittelachse vorbei verläuft.

Die DE 199 39 077 A1 betrifft ein Verfahren zur kontinuierlichen lösungsmittelfreien und mastikationsfreien Herstellung von Selbstklebemassen auf Basis von nichtthermoplastischen Elastomeren in einem kontinuierlich arbeitenden Planetwalzenextruder mit einem Füll- und einem Compoundierteil, wobei das Compoundierteil des Planetwalzenextruders zumindest von einem Walzenzylinder gebildet wird, bestehend aus
a) Aufgabe der Festkomponenten der Selbstklebemasse wie Elastomere und Harze in den Füllteil des Planetwalzenextruders, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
e) Austragen der Selbstklebemasse,
wobei die Temperaturen im Walzenzylinder innerhalb der Verfahrenslänge ein Maximum durchlaufen und damit höher sind als die Walzenzylindertemperaturen am Anfang und Ende des Planetwalzenextruders.

Die DE 199 39 073 A1 betrifft ein Verfahren zur kontinuierlichen lösungsmittelfreien und mastikationsfreien Herstellung von Selbstklebemassen auf Basis von nichtthermoplastischen Elastomeren in einem kontinuierlich arbeitenden Aggregat mit einem Füll- und einem Compoundierteil, bestehend aus
a) Aufgabe der Festkomponenten der Selbstklebemasse wie Elastomere und Harze in den Füllteil des Aggregats, gegebenenfalls Aufgabe von Füllstoffen, Farbstoffen und/oder Vemetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil,
e) Austragen der Selbstklebemasse und
f) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4- Walzenauftragswerk durchgeführt wird, so daß die Selbstklebemasse bei Durchgang durch ein oder mehrere Walzenspalte auf die gewünschte Dicke ausgeformt wird, und wobei die Walzen des Auftragswerkes einzeln auf Temperaturen von 20°C bis 150°C eingestellt werden können.

Die US 6 780 271 B1 betrifft ein Verfahren zur kontinuierlichen lösungsmittelfreien und mastikationsfreien Herstellung von Selbstklebemassen umfassend Kautschuk mit einem Molekulargewicht Mw ≥1 Million in einem kontinuierlich arbeitenden Planetwalzenextruder mit einem Füll- und einem Compoundierteil, umfassend
a) Aufgabe der Festkomponenten der Selbstklebemasse, einschließlich Kautschuk mit einem Molekulargewicht Mw ≥1 Million, in den Füllteil des Planetwalzenextruders, gegebenenfalls mit Füllstoffen, Farbstoffen, Vernetzern und/oder einer Kombination davon,
b) Übergabe der Festkomponenten der Selbstklebemasse aus dem Füllteil in den Compoundierteil,
c) Zugabe der Flüssigkomponenten der Selbstklebemasse in den Compoundierteil,
d) Herstellung einer homogenen Selbstklebemasse im Compoundierteil und
e) Austragen der Selbstklebemasse.

Eine Lösungsmittelfreie Herstellung von Haftklebemassen auf Basis von festem EPDM ist bislang möglich, sofern der Anteil an festem EPDM-Kautschuk sehr hoch ist. Haftklebemassen mit hohen Anteilen an festem EPDM wie z.B. 50 Gew.-% lassen sich per Extrusion häufig in homogener Form herstellen. Allerdings weisen Haftklebemassen mit derart hohen Anteilen an festem EPDM typischerweise geringe Klebkräfte auf Untergründen wie z.B. Stahl auf. Haftklebemassen mit geringeren Anteilen an festem EPDM wie z.B. 30 Gew.-% weisen hohe Klebkräfte auf verschiedenen Untergründen auf. Aufgrund der höheren Anteile an schmierenden Komponenten, d.h. Weichkomponenten, wie insbesondere Klebharzen und der damit verbundenen geringeren Scherkräfte lassen sich solche Haftklebemassen im Extrusionsverfahren jedoch nicht in homogener Form erzeugen, d.h. solche Haftklebemassen enthalten typischerweise insbesondere zahlreiche unaufgeschlossene Kautschukpartikel. Dies gilt vor allem für EPDM-Kautschuke mit hohem Ethylengehalt. Die alternative Herstellung per Lösungsmittelverfahren hat den großen Nachteil, dass sie nicht zur Herstellung dicker Klebeschichten geeignet ist.

Die der vorliegenden Erfindung zugrunde liegende Aufgabe besteht somit darin, ein Verfahren zur lösungsmittelfreien Herstellung einer Haftklebemasse auf Basis von festem EPDM-Kautschuk bereitzustellen, bei dem die resultierende Haftklebemasse homogen ist und gleichzeitig eine brauchbare Klebkraft auf diversen Untergründen aufweist.

Die Aufgabe wird überraschenderweise durch ein Verfahren gelöst, wie es in Anspruch 1 beschrieben ist. Vorteilhafte Ausführungsformen des Verfahrens befinden sich in den abhängigen Ansprüchen.

Dementsprechend betrifft die Erfindung ein Verfahren zur kontinuierlichen und lösungsmittelfreien Herstellung einer Haftklebemasse auf Basis von festem EPDM-Kautschuk in einem kontinuierlich arbeitenden Aggregat in Form eines

Planetwalzenextruders mit einem Füllteil und einem Compoundierteil, wobei der Compoundierteil aus mindestens zwei gekoppelten Walzenzylindern besteht, bei dem
a) der feste EPDM-Kautschuk und gegebenenfalls weitere Komponenten in den Füllteil des Planetwalzenextruders aufgegeben werden,
b) die Komponenten aus dem Füllteil in den Compoundierteil übergeben werden,
c) flüssiger EPDM-Kautschuk, Weichmacher, Klebharz und gegebenenfalls weitere Komponenten dem Compoundierteil zugegeben werden, und
d) die sich ergebende Haftklebemasse ausgetragen wird,
dadurch gekennzeichnet, dass
der feste EPDM-Kautschuk als Schmelze in den Füllteil aufgegeben wird.

Da das erfindungsgemäße Verfahren Lösungsmittelfrei ist, eignet es sich gut zur Herstellung von Haftklebemasseschichten unterschiedlicher Dicken, insbesondere auch hoher Dicken. Aufwändiges Trocknen bei der Herstellung entfällt. Insbesondere lassen sich durch das erfindungsgemäße Verfahren Haftklebemassen herstellen, die homogen sind und gleichzeitig eine brauchbare Klebkraft auf diversen Untergründen aufweisen. Damit sind typischerweise Haftklebemassen gemeint, die eine hohe Klebkraft auf Untergründen verschiedener Polarität aufweisen, wie zum Beispiel auf polaren Untergründen wie Stahl oder auf unpolaren Untergründen, d.h. LSE ("low surface energy")- Oberflächen, wie Polypropylen oder Polyethylen. Die Klebkräfte sind vergleichbar mit den Klebkräften von entsprechenden Haftklebemassen, die nach dem Lösungsmittelverfahren hergestellt worden sind.

Überraschenderweise wurde somit gefunden, dass das erfindungsgemäße Vorab-Aufschmelzen des festen EPDM-Kautschuks im dargestellten Verfahren auch bei Einsatz eines verhältnismäßig geringen Anteils an festem EPDM Haftklebemassen auf Basis von festem EPDM-Kautschuk hervorbringt, die homogen sind.

Ebenso überraschend ist, dass das erfindungsgemäße Verfahren im Gegensatz zum Lösungsmittelverfahren auch die Herstellung von homogenen Haftklebemassen auf Basis von festem EPDM-Kautschuk ermöglicht, der einen verhältnismäßig hohen Ethylengehalt, wie insbesondere von mehr als 55 bis 62 Gew.-%, aufweist. Die viskoelastischen Eigenschaften von EPDM werden wesentlich vom Ethylengehalt bestimmt, da Polyethylen eine starke Tendenz zum Kristallisieren hat. Polymere mit einem Ethylengehalt zwischen 40 und 55 Gew.-% sind amorph und haben die beste Kälteflexibilität. Mit steigendem Gehalt an Ethylen nimmt die Kristallinität zu. Ein EPDM mit mittlerem Ethylengehalt von 55 bis 65 Gew.-% ist teilkristallin. Polymere mit über 65 Gew.-% Ethylen haben größere kristalline Bereiche und verhalten sich wie thermoplastische Elastomere; diese haben bereits im unvernetzten Zustand eine hohe Reißfestigkeit, die mit steigendem Ethylenanteil bis zu 12 MPa betragen kann. Homogene Haftklebemassen auf Basis teilkristallinen festen EPDMs lassen sich durch das erfindungsgemäße Verfahren sogar dann erzielen, wenn der Anteil an festem EPDM verhältnismäßig gering ist.

Dementsprechend betrifft die vorliegende Erfindung auch eine Haftklebemasse auf Basis von festem EPDM-Kautschuk, die flüssigen EPDM-Kautschuk, Weichmacher und Klebharz enthält, dadurch gekennzeichnet, dass der feste EPDM-Kautschuk zu 55 bis 75 Gew.-%, vorzugsweise 55 bis 65 Gew.-%, wie zum Beispiel größer 55 bis 62 Gew.-%, aus Ethylen aufgebaut ist, bezogen auf das Gesamtgewicht der zugrunde liegenden Monomerzusammensetzung, und in der Haftklebemasse der Anteil an Weichmacher zwischen 5 und 15 Gew.-% beträgt, bezogen auf das Gesamtgewicht der Haftklebemasse.

Die vorteilhaften Ausführungsformen des erfindungsgemäßen Verfahrens, die Art und Menge der eingesetzten Komponenten betreffen, gelten entsprechend auch für die genannte Haftklebemasse.

Die vorliegende Erfindung betrifft zudem eine Haftklebemasse, die gemäß dem erfindungsgemäßen Verfahren erhältlich ist und dadurch gekennzeichnet ist, dass in der Haftklebemasse der Anteil an Weichmacher zwischen 5 und 15 Gew.-% beträgt, bezogen auf das Gesamtgewicht der Haftklebemasse, sowie ein Haftklebeband, das mindestens eine Schicht aus einer derartigen Haftklebemasse umfasst. Die vorteilhaften Ausführungsformen des erfindungsgemäßen Verfahrens gelten entsprechend auch für die genannte Haftklebemasse sowie das genannte Haftklebeband.

Wie vorstehend beschrieben, sind die erfindungsgemäßen Haftklebemassen typischerweise homogen. Die Prüfung einer Haftklebemasse auf Homogenität wird im Rahmen der vorliegenden Anmeldung wie folgt durchgeführt: 5 g der Haftklebemasse werden nach dem Austritt aus dem Planetwalzenextruder entnommen und zwischen zwei Prozesslinern mithilfe einer Heißpresse bei 110°C und 5 bar Druck verpresst. Als Prozessliner werden dabei beidseitig mit unterschiedlich abgestuften Silikonsystemen beschichtete PET-Folien einer Dicke von 75 µm eingesetzt. Nach dem Abkühlen wird der Pressling auseinandergezogen, so dass sich eine Dicke der sich ergebenden Haftklebemasseschicht von etwa 50 µm ergibt. Die Schicht wird vor eine Lampe gehalten. Sie wird als homogen bezeichnet, wenn auf einer gestreckten Fläche von 100 cm² mit dem Auge weniger als 10, bevorzugt weniger als 5, und insbesondere weniger als 2 unaufgeschlossene Kautschuk-Partikel zu finden sind. Bei der genannten Prüfung sollten ferner keine schmierenden Komponenten wie nicht eingearbeitetes Klebharz zu sehen sein. Unter schmierenden Komponenten sind erfindungsgemäß insbesondere Klebharze, Weichmacher und flüssiger EPDM-Kautschuk gemeint. Klebharze schmelzen ggf. erst während des Compoundierprozesses bei Einwirken von Scherenergie und/oder äußerer Temperierung auf.

Im Rahmen dieser Anmeldung wird zudem unter dem Begriff "Schmelze" insbesondere ein Zustand verstanden, in dem eine Komponente wie insbesondere fester EPDM-Kautschuk oder eine Mischung von Komponenten plastisch verformbar ist. Aufgrund des typischerweise elastischen Charakters des oder der Polymere und des fehlenden thermoplastischen Verhaltens wird dabei kein aufgeschmolzener Zustand erreicht, bei dem das Verhalten einer Flüssigkeit vorliegt. Im Fall einer Mischung bezieht sich das Verhalten dabei auf die homogene Mischung und nicht auf einzelne Mischungskomponenten, die durchaus im flüssigen Zustand vorliegen können.

Flüssige Kautschuke zeichnen sich gegenüber festen Kautschuken dadurch aus, dass sie einen Erweichungspunkt T_{E} von weniger als 40 °C aufweisen. Feste Kautschuke sind somit dadurch gekennzeichnet, dass sie keinen Erweichungspunkt T_{E} von weniger als 40 °C aufweisen. "Feste Kautschukkomponenten" sind gemäß der vorliegenden Erfindung somit bei Raumtemperatur fest, auch wenn sie erfindungsgemäß vor Aufgabe auf den Extruder geschmolzen werden.

Mit einer Haftklebemasse auf Basis von festem EPDM-Kautschuk ist typischerweise eine Haftklebemasse gemeint, deren Polymer zu mindestens 50 Gew.-% aus festem EPDM-Kauschuk besteht, bezogen auf das gesamte in der Haftklebemasse enthaltene Polymer. In einer bevorzugten Ausführungsform besteht das in der Haftklebemasse enthaltene Polymer zu mehr als 90 Gew.-%, bevorzugter zu mehr als 95 Gew.-%, und insbesondere zu 100 Gew.-% aus festem, und gegebenenfalls flüssigem, EPDM-Kautschuk. Im Rahmen der vorliegenden Anmeldung gelten Klebharze dabei nicht als Polymere.

Der feste EPDM-Kautschuk ist vorzugsweise zu 30 bis 80 Gew.-%, bevorzugter 40 bis 75 Gew.-%, noch bevorzugter 45 bis 70 Gew.-%, insbesondere 55 bis 65 Gew.-%, wie zum Beispiel größer 55 bis 62 Gew.-%, aus Ethylen aufgebaut, jeweils bezogen auf das Gesamtgewicht der zugrunde liegenden Monomerzusammensetzung.

Der feste EPDM-Kautschuk ist vorzugsweise zu 20 bis 60 Gew.-%, bevorzugter 30 bis 50 Gew.-%, aus Propylen aufgebaut, jeweils bezogen auf das Gesamtgewicht der zugrunde liegenden Monomerzusammensetzung.

Der feste EPDM-Kautschuk ist vorzugsweise zu bis zu 20 Gew.-%, bevorzugter 5 bis 10 Gew.-%, aus Dien aufgebaut, jeweils bezogen auf das Gesamtgewicht der zugrunde liegenden Monomerzusammensetzung. Der Dien-Gehalt kommerzieller Produkte liegt zwischen 2 und 12 Gew.-%, entsprechend einem Anteil von 3 bis 16 Doppelbindungen pro 1000 C-Atomen. Ein höherer Dien-Gehalt bewirkt eine höhere Vernetzungsgeschwindigkeit, eine höhere Vernetzungsdichte, höhere Festigkeiten und eine geringere bleibende Verformung. Die Alterungs-, Witterungs- und Ozonbeständigkeit nimmt dagegen mit steigendem Dien-Gehalt ab. Vorzugsweise ist das Dien Ethyliden-Norbornen (ENB), Dicyclopentadien oder 1,4- Hexadien.

Die Mooney-Viskosität (ML 1 + 4/125 °C) des festen EPDM-Kautschuks gemessen gemäß DIN 53523 beträgt vorzugsweise 20 bis 120, bevorzugter 40 bis 90 und insbesondere 50 bis 80.

Vorzugsweise beträgt im erfindungsgemäßen Verfahren der Anteil an festem EPDM-Kautschuk mindestens 15 Gew.-%, bevorzugter 20 bis 45 Gew. %, insbesondere 25 bis weniger als 40 Gew.-%, wie zum Beispiel 28 bis 35 Gew.-%, bezogen auf das Gesamtgewicht der herzustellenden Haftklebemasse. Bei Verwendung von verhältnismäßig geringen Anteilen an festem EPDM-Kautschuk lassen sich Haftklebemassen mit besonders guten Klebkräften auf Oberflächen unterschiedlicher Polarität wie zum Beispiel Stahl, Polypropylen bzw. Polyethylen herstellen.

Der flüssige EPDM-Kautschuk ist vorzugsweise zu 30 bis 70 Gew.-%, bevorzugter 40 bis 68 Gew.-%, aus Ethylen aufgebaut, jeweils bezogen auf das Gesamtgewicht der zugrunde liegenden Monomerzusammensetzung. Zudem weist der flüssige EPDM-Kautschuk vorzugsweise ein gewichtsmittleres Molgewicht M_{w} ≤ 100.000 Da, bevorzugter ≤ 50.000 Da, noch bevorzugter ≤ 30.000 Da und insbesondere ≤ 20.000 Da auf.

Vorzugsweise beträgt im erfindungsgemäßen Verfahren der Anteil an flüssigem EPDM-Kautschuk bis zu 30 Gew.-%, insbesondere 10 bis 20 Gew.-%, bezogen auf das Gesamtgewicht der herzustellenden Haftklebemasse. Ebenso bevorzugt wird der flüssige EPDM-Kautschuk in einer Menge von bis zu 100 phr, vorzugsweise 33 bis 67 phr eingesetzt.

Die in der vorliegenden Anmeldung gemachten Angaben in phr (engl. "parts per hundred rubber") bedeuten jeweils Gewichtsteile der betreffenden Komponente bezogen auf 100 Gewichtsteile aller festen Kautschukkomponenten der Haftklebemasse, also beispielsweise ohne Berücksichtigung von Klebharz oder flüssigem Kautschuk.

Weichmacher sind Plastifizierungsmittel wie zum Beispiel Weichharze, Phosphate oder Polyphosphate, paraffinische und naphthenische Öle, Oligomere wie Oligobutadienen, - isoprenen, flüssigen Terpenharze, pflanzliche und tierische Ölen und Fette. Weichharze können die gleiche chemische Basis wie die erfindungsgemäß einsetzbaren Klebharze aufweisen, unterscheiden sich von diesen jedoch durch ihren Erweichungspunkt, der typischerweise bei < 40 °C liegt. Besonders bevorzugt kommen im erfindungsgemäßen Verfahren als Weichmacher Weißöle zum Einsatz. Weißöle sind paraffinische, d.h. paraffinhaltige Öle. Neben paraffinischen Bestandteilen enthalten sie häufig naphthenische Bestandteile. Bevorzugt enthalten sie keine aromatischen Bestandteile und keine Schwefelverbindungen. Falls als Weichmacher Öl eingesetzt wird, kann es sich um Mineralöl oder synthetisches Öl handeln.

Der Anteil von im erfindungsgemäßen Verfahren eingesetztem Weichmacher beträgt vorzugsweise bis zu 20 Gew.-%, insbesondere zwischen 5 und 15 Gew.-%, jeweils bezogen auf das Gesamtgewicht der herzustellenden Haftklebemasse. Ebenso bevorzugt wird der Weichmacher in einer Menge von bis zu 67 phr, vorzugsweise 17 bis 50 phr eingesetzt.

Im erfindungsgemäßen Verfahren wird unter anderem Klebharz eingesetzt. Unter der Bezeichnung "Klebharz", englisch "Tackifier Resins", versteht der Fachmann einen Stoff auf Harzbasis, der die Klebrigkeit erhöht. Typische Erweichungspunkte T_{E} von Klebharzen liegen bei mindestens 40 °C.

Als Klebharze können im erfindungsgemäßen Verfahren beispielsweise hydrierte oder unhydrierte Kohlenwasserstoffharze (C9 oder C5-Harze wie zum Beispiel Regalite) verwendet werden.

Geeignet und bevorzugt sind auch modifizierte Kohlenwasserstoffharze wie zum Beispiel modifizierte C9-Harze mit einem DACP von kleiner als - 30 °C.

Auch Kombinationen der vorstehend genannten Klebharze sowie weitere geeignete Klebharze können eingesetzt werden, um die Eigenschaften der resultierenden Haftklebemasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen. Dem Fachmann ist geläufig, welche Harze abhängig von den Eigenschaften des EPDM-Kautschuks, insbesondere des Ethylengehalts, vorzugsweise auszuwählen sind. Bevorzugte Klebharze weisen einen DACP von weniger als - 20 °C, bevorzugter weniger als - 40 °C und insbesondere weniger als - 60 °C auf.

Wenn im erfindungsgemäßen Verfahren das Klebharz in einer Menge von insgesamt 30 bis 180 phr eingesetzt wird, ist die sich ergebende Haftklebemasse insbesondere gleichzeitig durch gute Adhäsions- und Kohäsionswerte gekennzeichnet. Vorzugsweise wird das Klebharz in einer Menge von 90 bis 170 phr, bevorzugter 100 bis 160 phr eingesetzt. Hierdurch lassen sich typischerweise gleichzeitig besonders gute Adhäsions- und Kohäsionswerte der sich ergebenden Haftklebemasse erzielen. Ebenso bevorzugt wird dementsprechend das Klebharz in einer Menge von 9 bis 54 Gew.-%, bevorzugter von 27 bis 51 Gew.-% und insbesondere von 30 bis 48 Gew.-% eingesetzt, jeweils bezogen auf das Gesamtgewicht der sich ergebenden Haftklebemasse.

Bei Verwendung der angegebenen bevorzugten Mengen der schmierenden Komponenten (flüssiger EPDM-Kautschuk, Weichmacher, Klebharz) lassen sich erfindungsgemäß besonders homogene Klebemassen herstellen.

Neben dem festen EPDM-Kautschuk, dem flüssigen EPDM-Kautschuk, dem Weichmacher und dem Klebharz können vor allem zur Einstellung der optischen und klebtechnischen Eigenschaften als weitere Komponenten insbesondere Füllstoffe, Farbstoffe, Alterungsschutzmittel, Flammschutzmittel und/oder Vernetzer eingesetzt werden. Vernetzungspromotoren werden erfindungsgemäß auch als Vernetzer angesehen. Die weiteren Komponenten können in den Füllteil des Planetwalzenextruders aufgegeben werden und/oder dem Compoundierteil zugegeben werden.

Füllstoffe werden beispielsweise zur Steigerung der Kohäsion einer Haftklebemasse eingesetzt. Füllstoffe können auch den Aufschluss der eingesetzten Polymere verbessern. Füllstoffe werden auch zur Gewichts- beziehungsweise Volumenerhöhung beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt. Auch bei Kautschuk kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße. Man kann anorganische und organische Füllstoffe auch nach ihrer Dichte unterscheiden. So erhöhen die oft in Klebemassen verwendeten anorganischen Füllstoffe wie Kreide, Titandioxid, Calcium- und Bariumsulfat die Dichte des Composites.

Bei den Alterungsschutzmitteln handelt es sich insbesondere um Antiozonantien, primäre Antioxidantien wie zum Beispiel sterisch gehinderte Phenole, sekundäre Antioxidantien wie zum Beispiel Phosphite oder Thioether, oder um Lichtschutzmittel wie zum Beispiel UV-Absorber oder sterisch gehinderte Amine.

Beim Vernetzer kann es sich beispielsweise um einen thermisch aktivierbaren Vernetzer handeln, beispielsweise ausgewählt aus der Gruppe der reaktiven Phenolharz- oder Diisocyanatvernetzungssysteme. Typischerweise wird der thermisch aktivierbare Vernetzer erfindungsgemäß erst bei einer solchen Temperatur aktiviert, die höher ist als die Temperatur der Masse im Compoundierteil des Planetwalzenextruders zumindest ab Zugabe des Vernetzers. Vorzugsweise wird der thermische Vernetzer erfindungsgemäß oberhalb von 140 °C und insbesondere oberhalb von 150 °C aktiviert. Ansonsten ist wegen im Compoundierteil einsetzender chemischen Vernetzungsreaktionen mit einer erheblichen Viskositätserhöhung zu rechnen, so dass die resultierende Haftklebemasse ihre Streichfähigkeit einbüßt und somit nicht mehr auf ein bahnförmiges Material aufgetragen werden kann. In einer bevorzugten Ausführungsform kann die erfindungsgemäße Haftklebemasse mittels Elektronenstrahlen vernetzt werden, d.h. eine ESH-Vernetzung durchgeführt werden. Die ESH-Vernetzung kann mit oder ohne Vernetzungspromotor durchgeführt werden. Vorzugsweise wird ein Vernetzungspromotor eingesetzt. Dabei kann es sich beispielsweise um ein multifunktionelles (Meth)Acrylat wie Trimethylolpropantriacrylat (TMPTA) handeln.

Das Verfahren zur Herstellung einer Haftklebemasse auf Basis von festem EPDM-Kautschuk wird in einem Planetwalzenextruder mit einem Füllteil und einem Compoundierteil durchgeführt, wobei der Compundierteil aus mindestens zwei gekoppelten Walzenzylindern besteht.

Planetwalzenextruder bestehen aus mehreren Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.

Planetwalzenextruder fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Innendurchmesser der Walzenzylinder, d.h. Walzenzylinderdurchmesser, typischerweise zwischen 70 mm und 400 mm.

Für die Verarbeitung von Kunststoffen haben Planetwalzenextruder in der Regel einen Füllteil und einen Compoundierteil.

Der Füllteil des eingesetzten Planetwalzenextruders weist gemäß einer ersten Alternative eine Förderschnecke auf, auf die der feste EPDM-Kautschuk und gegebenenfalls weitere Komponenten kontinuierlich dosiert werden. Die Förderschnecke übergibt das Material dann dem Compoundierteil des Planetwalzenextruders. Der Bereich des Füllteils mit der Schnecke ist vorzugsweise auf unter 20 °C gekühlt, beispielsweise auf 5 bis 18 °C, und insbesondere 8 bis 15 °C, um Anbackungen von Materialien auf der Schnecke möglichst zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies nicht von Bedeutung. Auch die Zentralspindel ist vorzugsweise auf unter 20 °C gekühlt, beispielsweise auf 5 bis 18 °C, und insbesondere 8 bis 15 °C, um Anbackungen von Materialien auf der Zentralspindel möglichst zu vermeiden. Typischerweise ist die Zentralspindel dabei mit einem Medium wie zum Beispiel Wasser oder Öl gekühlt. Ebenso bevorzugt ist eine Temperierung der Zentralspindel auf 20 bis 30 °C.

Das Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl und Art der in jedem Walzenzylinder umlaufenden Planetenspindeln kann variiert und somit den Erfordernissen des Prozesses angepasst werden. Die Spindelanzahl und -art beeinflusst das freie Volumen innerhalb des Planetwalzenextruders, die Verweilzeit des Materials im Prozess und bestimmt zudem die Flächengröße für den Wärme- und Materialaustausch. Die Anzahl und Art der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen. Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzenzylinderdurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Innendurchmesser des Walzenzylinders von 70 mm bis zu sieben Planetenspindeln verwendet, während bei einem Innendurchmesser des Walzenzylinders von 200 mm zum Beispiel zehn und bei einem Innendurchmesser des Walzenzylinders von 400 mm beispielsweise 24 Planetenspindeln verwendet werden können.

Als vorteilhaft hat sich die Verwendung eines Planetwalzenextruders herausgestellt, dessen Compoundierteil aus zwei bis acht gekoppelten Walzenzylindern, vorzugsweise aus drei oder vier gekoppelten Walzenzylindern besteht.

Über Seitenbeschicker (Side-feeder) lassen sich dem Compoundierteil sowohl flüssige, als auch feste Komponenten zugeben. Die Walzenzylinder sind typischerweise in ungefähr der Mitte der Zylinder mit einer Öffnung für Seitenbeschickung versehen. Ebenso geeignet und bevorzugt sind alternativ Seitenbeschicker nach ungefähr ¼ jedes Zylinders. Flüssigkeiten werden dem Compoundierteil üblicherweise über Seitenbeschicker und/oder Anlaufringe und/oder Einspritzringe mit vorzugsweise radialen Bohrungen zugegeben. Zwischen zwei zusammengeschalteten Walzenzylindern befindet sich im Allgemeinen ein Anlaufring, durch dessen freien Querschnitt die Zentralspindel führt und der die Planetenspindeln eines Walzenzylinders ortsfest hält. Anlaufringe können über zusätzlich eingesetzte Dispergierringe verschiedene freie Querschnitte aufweisen, womit der Rückstau des Produkts und damit der Füllgrad und die Verweilzeit beziehungsweise das Ausmaß an Scherenergie variiert und an die Prozessanforderungen angepasst werden kann. Zusätzlich können die Anlaufringe mit radialen Bohrungen versehen sein, über die Flüssigkeiten oder auch Schutzgase wie Stickstoff, Argon, Kohlendioxid o. ä. dem Compoundierteil des Planetwalzenextruders zugeführt werden können. Komponenten können so über den sich zwischen dem Füllteil und dem ersten Walzenzylinder befindlichen Einspritzring dem ersten Walzenzylinder zugegeben werden, über den ersten Anlaufring dem zweiten Walzenzylinder, über den zweiten Anlaufring dem dritten Walzenzylinder usw.

Die Walzenzylinder sind üblicherweise separat temperierbare Walzenzylinder, was eine ausgewogene Temperaturführung des Prozesses ermöglicht, die beispielsweise die Verwendung von thermisch aktivierbaren Vernetzersystemen erlaubt. Die Zentralspindel sowie jeder Walzenzylinder sollten vorzugsweise über einen oder mehrere separate Temperier- beziehungsweise Kühlkreise verfügen, um ein Temperaturregime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Vorzugsweise beträgt die Wandungstemperatur der Walzenzylinder unabhängig voneinander weniger als 160 °C, bevorzugter 80 bis 150 °C, wie insbesondere 100 bis 140 °C. Über die Wandungstemperatur der Walzenzylinder lässt sich insbesondere der Eintrag an Prozesswärme steuern. Bei den genannten Wandungstemperaturen lassen sich Haftklebemassen herstellen, die typischerweise besonders homogen sind und gleichzeitig allenfalls einer geringfügigen Mastikation unterliegen.

Der Energieeintrag wird außerdem durch die Konfiguration des Planetwalzenextruders beeinflusst. Über die Drehzahl der Zentralspindel des Planetwalzenextruders lassen sich wiederum insbesondere der Eintrag von Scherenergie und die Gesamtverweildauer der Masse im Planetwalzenextruder steuern. Neben der Wandungstemperatur der Walzenzylinder und dem eingesetzten Extrudertyp wird der Energieeintrag daher auch durch die Drehzahl der Zentralspindel beeinflusst. Erfindungsgemäß kann einer Verringerung bzw. Erhöhung der Wandungstemperatur der Walzenzylinder typischerweise durch eine gegenläufige Veränderung der Drehzahl der Zentralspindel begegnet werden, um eine Haftklebemasse mit einem vergleichbaren Eigenschaftsprofil zu erhalten.

Insbesondere wird die Drehzahl aber beim Übergang von kleineren zu größeren Maschinen und Durchsätzen verändert, wobei typischerweise eine kleinere Maschine (also eine solche mit kleinerem Innendurchmesser der Walzenzylinder) mit einer höheren Drehzahl betrieben wird, um ein vergleichbares Ergebnis zu erhalten zu einer größeren Maschine (also einer mit einem größeren Innendurchmesser der Walzenzylinder) mit einer niedrigeren Drehzahl. Dem Fachmann sind solche Scale-Up Anpassungen in Bezug auf Maschinengröße und Materialdurchsatz geläufig.

Charakteristisch für den Planetwalzenextruder ist aber auch, dass die Temperaturkontrolle der verarbeiteten Masse sehr gut über die eingestellten Gehäusetemperaturen gelingt, und regelmäßig besser als beispielsweise mit einem Doppelschneckenextruder. Bei einem Planetwalzenextruder kann deshalb oft auch bei einem Scale-Up-Schritt mit ähnlichen Wandungstemperaturen gearbeitet werden, selbst wenn die Drehzahl deutlich geändert wird.

Beim Austritt aus dem Planetwalzenextruder ergeben sich typischerweise Temperaturen der Haftklebemassen von weniger als 170 °C, vorzugsweise von 80 bis 150 °C, bevorzugter von 90 °C bis 140 °C, wie insbesondere 100 bis 120 °C. Die Austrittstemperatur der Haftklebemasse wird typischerweise mittels Einstechfühler im Produktaustritt ermittelt.

Geeignete Planetwalzenextruder sind beispielsweise beschrieben in der EP 2 098 354 A1, der WO 2017/050400 A1, der WO 2016/124310 A1 und der WO 2014/056553 A1.

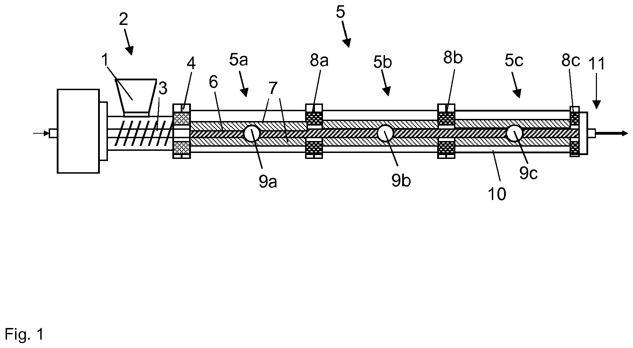

In den Beispielen wurde ein Planetwalzenextruder der Firma ENTEX Rust&Mitschke verwendet. Die Planetwalzenextruder-Konfiguration, die in den Beispielen verwendet wird, zeigt Figur 1.

Der Planetwalzenextruder hat einen Füllteil (2) und einen Compoundierteil (5), der aus drei hintereinander geschalteten Walzenzylindern (5a-5c) besteht. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung (10) des Walzenzylinders (5a-5c) ab.

Am Ende jedes Walzenzylinders (5a-5c) befindet sich ein Anlaufring (8a-8c), der die Planetenspindeln (7) ortsfest hält. Optional befinden sich an diesen Stellen zusätzlich Dispergierringe.

Über die Füllöffnung (1) können Komponenten wie zum Beispiel der feste EPDM-Kautschuk auf die Förderschnecke (3) des Füllteils (2) des Planetwalzenextruders dosiert werden. Die Förderschnecke (3) übergibt die Materialien danach auf die Zentralspindel (6) des ersten Walzenzylinders (5a). Zur Verbesserung des Materialeinzugs zwischen Zentralspindel (6) und Planetenspindeln (7) werden im ersten Walzenzylinder (5a) vier lange und drei kurze Planetenspindeln (7) verwendet.

Die innen hohle Förderschnecke (3) und Zentralspindel (6) sind kraftschlüssig miteinander verbunden und besitzen einen gemeinsamen Temperierkreis. Jeder Walzenzylinder (5a-5d) des Compoundierteils (5) verfügt über eine unabhängige Temperierung. Über einen weiteren Temperierkreis kann das Füllteil (2) gekühlt werden. Als Temperiermedium kann Wasser verwendet werden.

Die Dosierung von Flüssigkeiten wie zum Beispiel flüssigem EPDM-Kautschuk, Weichmacher, flüssigem Klebharz beziehungsweise Vernetzer kann beispielsweise über den Einspritzring (4) vor dem ersten Walzenzylinder (5a) beziehungsweise über die mit Bohrungen versehenen Anlaufringe (8a-8c) oder in Kombination beider Möglichkeiten erfolgen. Die Walzenzylinder (5a-5c) sind in ungefähr der Mitte der Zylinder mit einer Öffnung für Seitenbeschickung versehen. Über diese können bei Bedarf über Seitenbeschicker (9a-9c) flüssige oder feste Komponenten zugegeben werden.

Die Temperatur der Haftklebemasse wird mittels Einstechfühler im Produktaustritt (11) ermittelt.

Der feste EPDM-Kautschuk wird vor Aufgabe auf den Füllteil in einem Extruder, vorzugsweise einem Einschneckenextruder (ESE), aufgeschmolzen, beispielsweise bei einer Wandungstemperatur von 180 bis 200 °C, wie insbesondere bei 190 °C. Typischerweise hängt die optimale Wandungstemperatur vom kristallinen Anteil des festen EPDM-Kautschuks ab, wobei mit steigender Kristallinität üblicherweise steigende Temperaturen gewählt werden. Das Aufschmelzen kann auch in einem Doppelschneckenextruder oder einem beliebigen anderen Extruder erfolgen.

In den Beispielen wurde ein Blaake Einschneckenextruder ES45/25D eingesetzt. Dessen maximale Schneckendrehzahl beträgt 124 Umdrehungen pro Minute. Der Schneckendurchmesser beträgt 45 mm, die Schneckenlänge 25 * D (D = Schneckendurchmesser).

Bei der beispielhaften Vorrichtung für das erfindungsgemäße Verfahren ist somit zusätzlich zu dem in Fig. 1 gezeigten Planetwalzenextruder ein weiterer Extruder vorgesehen, in dem der feste EPDM-Kautschuk aufgeschmolzen wird, bevor er über die Füllöffnung (1) in den Füllteil (2) gegeben und so dem Planetwalzenextruder als Schmelze zugeführt wird.

Erfindungsgemäß werden dem Compoundierteil flüssiger EPDM-Kautschuk, Weichmacher, Klebharz und gegebenenfalls weitere Komponenten zugegeben. Die genannten (schmierenden) Komponenten können dem Compoundierteil dabei unabhängig voneinander in ein oder mehreren Portionen zugegeben werden. Erfindungsgemäß bevorzugt ist es, insbesondere aus verfahrensökonomischen Gründen, wenn die Komponenten dem Compoundierteil in jeweils einer einzigen Portion zugegeben werden. Ein oder mehrere der genannten (schmierenden) Komponenten kann anteilig auch zusammen mit dem festen EPDM-Kautschuk und gegebenenfalls weiteren Komponenten in den Füllteil des Planetwalzenextruders aufgegeben werden. Im Verfahren gemäß vorliegender Erfindung können die Komponenten zudem als separate Komponenten, als gemeinsamer Premix oder als Teilvormischungen auf- bzw. zugegeben werden. Beispielsweise können gegebenenfalls eingesetzte weitere Komponenten wie zum Beispiel Vernetzer als Mischung mit dem festen EPDM-Kautschuk oder mit einer schmierenden Komponente, wie zum Beispiel Weichmacher, auf- bzw. zugegeben werden.

Im Unterschied zu sonst üblichen Herstellungsverfahren wird davon ausgegangen, dass im Planetwalzenextruder gemäß dem Verfahren der vorliegenden Erfindung allenfalls eine geringfügige Mastikation des Kautschuks stattfindet, da dieser hier nicht separat dem Einfluss hoher Scherenergie unterworfen wird, sondern zusammen mit den schmierenden Komponenten verarbeitet wird. Durch die Anwesenheit dieser schmierenden Komponenten wird das Ausmaß an Friktionsenergie derartig limitiert, dass die Mastikation des Kautschuks, d. h. der Molekulargewichtsabbau der Elastomeren, gering gehalten sowie hohe resultierende Compoundierungstemperaturen vermieden werden können. Dementsprechend ist es bevorzugt, wenn die erste schmierende Komponente oder zumindest ein Teil davon dem Füllteil oder dem ersten Walzenzylinder des Compoundierteils, typischerweise über den sich zwischen Füllteil und erstem Walzenzylinder befindlichen Einspritzring oder einen Seitenbeschicker, auf- bzw. zugegeben wird. Besonders bevorzugt wird die erste schmierende Komponente über den Einspritzring dem ersten Walzenzylinder zugegeben.

Die schmierenden Komponenten können dem Planetwalzenextruder an dergleichen Stelle oder an unterschiedlichen Stellen zugegeben werden. Typischerweise werden sie dem Planetwalzenextruder an unterschiedlichen Stellen zugegeben, was sich positiv auf die Homogenität der sich ergebenden Klebemasse auswirkt. Die Reihenfolge der Zugabe kann dabei erfindungsgemäß beliebig sein. Bei der ersten auf- bzw. zugegebenen schmierenden Komponente handelt es sich erfindungsgemäß vorzugsweise um den flüssigen EPDM-Kautschuk. Ebenso vorzugsweise ist die nächste, d.h. zweite, schmierende Komponente, die stromabwärts dem Planetwalzenextruder zugegeben wird, der Weichmacher. Vorzugsweise wird die zweite schmierende Komponente dem zweiten Walzenzylinder des Compoundierteils, typischerweise über den sich zwischen dem ersten und zweiten Walzenzylinder befindlichen ersten Anlaufring oder einen Seitenbeschicker, zugegeben. Besonders bevorzugt wird die zweite schmierende Komponente über einen Seitenbeschicker dem zweiten Walzenzylinder zugegeben. Ebenso vorzugsweise ist die dritte schmierende Komponente, die stromabwärts dem Planetwalzenextruder zugegeben wird, das Klebharz. Vorzugsweise wird die dritte schmierende Komponente dem dritten Walzenzylinder des Compoundierteils, typischerweise über den sich zwischen dem zweiten und dritten Walzenzylinder befindlichen zweiten Anlaufring oder einen Seitenbeschicker, zugegeben. Besonders bevorzugt wird die dritte schmierende Komponente über den sich zwischen dem zweiten und dritten Walzenzylinder befindlichen zweiten Anlaufring dem dritten Walzenzylinder zugegeben; dies gilt insbesondere dann, wenn das Compoundierteil lediglich aus drei Walzenzylindern besteht.

Vorzugsweise ist das Compoundierteil des eingesetzten Planetwalzenextruders bzw. das erfindungsgemäße Verfahren derart ausgestaltet, dass die sich nach Zugabe der letzten (schmierenden) Komponente ergebende Masse mindestens einen weiteren Walzenzylinder passiert. Dies fördert ein vollständiges Aufschließen des Kautschuks bzw. die gewünschte Homogenisier- und Dispergierleistung bei wirtschaftlichen Durchsatzraten. Dementsprechend besteht das Compoundierteil des Planetewalzenextruders erfindungsgemäß vorzugsweise aus drei oder vier gekoppelten Walzenzylindern.

Das Klebharz kann als festes oder flüssiges Klebharz zu- bzw. aufgegeben werden. Vorzugsweise wird das Klebharz als flüssiges Klebharz zu- bzw. aufgegeben, um eine besonders homogene Klebemasse herzustellen. Mit der Zu- bzw. Aufgabe von flüssigem Klebharz ist erfindungsgemäß gemeint, dass das Klebharz oberhalb seines Erweichungspunkts T_{E} zu- bzw. aufgegeben wird, beispielsweise 20 bis 40 °C oberhalb seines Erweichungspunkts T_{E}. Mit der Auf- bzw. Zugabe von festem Klebharz ist erfindungsgemäß dementsprechend gemeint, dass das Klebharz unterhalb seines Erweichungspunkts T_{E} zu- bzw. aufgegeben wird. Beim festen und flüssigen Klebharz kann es sich erfindungsgemäß somit um das gleiche Klebharz handeln, das jedoch je nach Anwendungstemperatur fest oder flüssig ist. Erfindungsgemäß kann das Klebharz auch als Harzsplit eingesetzt werden, wobei Teile des Klebharzes beispielsweise zusammen mit dem festen EPDM-Kautschuk und gegebenenfalls weiteren Komponenten in den Füllteil des Planetwalzenextruders aufgegeben werden.

Im erfindungsgemäßen Verfahren kann die Haftklebemasse nach dem Austragen aus dem Planetwalzenextruder mindestens einseitig auf ein bahnförmiges Material, d.h. einen bahnförmigen Träger, beschichtet werden. Als bahnförmige Trägermaterialien für die erfindungsgemäß hergestellten hochleistungsfähigen Haftklebemassen sind je nach Verwendungszweck des bereitzustellenden Klebebandes alle bekannten Träger, gegebenenfalls mit entsprechender chemischer oder physikalischer Oberflächenvorbehandlung der Streichseite sowie antiadhesiver physikalischer Behandlung oder Beschichtung der Rückseite geeignet. Genannt seien beispielsweise gekreppte und ungekreppte Papiere, Polyethylen-, Polypropylen-, mono- oder biaxial orientierte Polypropylenfolien, Polyesterfolien wie PET-Folien, PVC- und andere Folien, bahnförmige Schaumstoffe, beispielsweise aus Polyethylen und Polyurethan, Gewebe, Gewirke und Vliese. Schließlich kann das bahnförmige Material ein antiadhäsives oder beidseitig antiadhäsiv beschichtetes Material sein wie Trennpapiere oder Trennfolien. Das bahnförmige Material kann somit ein permanenter Träger oder ein temporärer Träger, d.h. ein Liner, sein. Temporäre Träger werden erfindungsgemäß nicht als Bestandteil eines Haftklebebands angesehen.

Das erfindungsgemäße Verfahren erlaubt somit im Verbund mit einer nachgeschalteten Beschichtungs- und gegebenenfalls Vernetzungseinheit die Herstellung von hochleistungsfähigen Haftklebebändern. Dabei wird die erfindungsgemäß hergestellte Haftklebemasse mit einem Auftragswerk zumindest einseitig auf ein bahnförmiges Material Lösungsmittelfrei beschichtet. Die vorliegende Erfindung betrifft dementsprechend auch ein Haftklebeband, das mindestens eine Schicht aus einer nach dem erfindungsgemäßen Verfahren herstellbaren Haftklebemasse umfasst.

Vorzugsweise ist die Beschichtungseinheit ein Kalander oder eine Düse, durch den beziehungsweise durch die die Klebemasse auf ein Trägermaterial aufgebracht wird. Kalander ermöglichen, dass die Klebemasse beim Durchgang durch einen oder mehrere Walzenspalte auf die gewünschte Dicke ausgeformt wird.

Erfindungsgemäß wird vorgeschlagen, die Beschichtung der erfindungsgemäß hergestellten Klebemassen mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen, können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einer feststehenden Rakel ergibt. Die feststehende Rakel kann eine Messerrakel sein oder eine feststehende (Halb-)Walze.

Ein weiteres bevorzugtes Beispiel ist ein 3-Walzenauftragswerk aus zwei Masseauftragswalzen und einer Kühlwalze, wobei vorzugsweise die Masseauftragswalzen eine Temperatur von 80 bis 160 °C, bevorzugter 100 bis 140 °C aufweisen und die Kühlwalze vorzugsweise eine Temperatur von weniger als 20 °C, vorzugsweise weniger als 10 °C aufweist, und wobei typischerweise die Temperatur der zweiten Masseauftragswalze geringer ist als die der ersten Masseauftragswalze.

Ein weiteres bevorzugtes Auftragsverfahren umfasst die Beschichtung zwischen zwei bahnförmigen Trägermaterialien, wobei die Klebmasse an einem Zweiwalzenkalander zwischen diesen beiden Trägermaterialien ausgeformt wird. Die Walzentemperaturen betragen typischerweise zwischen 60 und 140 °C. Bevorzugt sind die Trägermaterialien dabei antiadhäsiv ausgerüstet, wie beispielsweise silikonisiertes PET oder Papier.

In einer bevorzugten Ausführungsform des erfindungsgemäßen Verfahrens ist zwischen Planetwalzenextruder und der eingesetzten Beschichtungsvorrichtung eine Schmelzepumpe oder ein Extruder zur Klebmasseförderung, insbesondere ein Entgasungsextruder wie beispielweise ein Doppelschneckenextruder, angeordnet, der drehzahl- oder druckgeregelt, vorzugsweise druckgeregelt betrieben wird. Um beim Beschichten einen definierten, vollflächigen Masseauftrag auf dem bahnförmigen Material, d.h. bahnförmigen Träger, zu erhalten, ist es vorteilhaft, wenn die Haftklebemasse vor Eintritt in eine Beschichtungsdüse und/oder einen Kalander einer Entgasung unterworfen wird, was besonders wichtig ist im Falle der Verwendung von Schutzgasen während des Compoundierprozesses im Planetwalzenextruder. Gemäß dem Verfahren der vorliegenden Erfindung erfolgt die Entgasung unter Einfluss von Vakuum vorzugsweise in Schneckenmaschinen, die zugleich die Druckverluste der Rohrleitungen und Beschichtungsdüse überwinden können.

In einer weiteren bevorzugten Ausführungsform des erfindungsgemäßen Verfahrens wird die Haftklebemasse in einem der Beschichtung nachfolgenden Schritt vernetzt, wobei die Haftklebemasse vorzugsweise mittels Elektronenstrahlen vernetzt wird (ESH-Vernetzung). Gegebenenfalls wird dabei ein Vernetzungspromotor eingesetzt. Eine Vernetzung der Haftklebemasse hat insbesondere den Vorteil, dass dadurch die Scherfestigkeit, auch bei erhöhten Temperaturen wie zum Beispiel 70 °C oder 80 °C, weiter erhöht wird.

Alternativ kann unter Temperatureinwirkung, d.h. thermisch vernetzt werden, hierbei müssen der Haftklebemasse entsprechende thermisch aktivierbare Vernetzer zugesetzt werden. Die hierzu notwendige Erwärmung der Haftklebemasse kann mit Hilfe der vorbekannten Techniken erfolgen, insbesondere mit Hilfe von Hochtemperatur-Kanälen, aber auch mit Hilfe von Infrarot-Strahlern oder mittels hochfrequenter magnetischer Wechselfelder, beispielsweise HF- UHF- oder Mikrowellen. Eine thermische Vernetzung ist besonders interessant im Fall von ESH-sensiblen Trägern. ESH- und thermische Vernetzung können auch kombiniert werden.

Vom Erfindungsgedanken ist wie vorstehend erläutert auch ein Haftklebeband umfasst, das unter Verwendung einer nach dem erfindungsgemäßen Verfahren herstellbaren Haftklebemasse hergestellt wird, indem auf ein bahnförmiges Material zumindest einseitig, gegebenenfalls auch beidseitig, die Haftklebemasse aufgetragen wird. Die Haftklebemasse ist dabei dadurch gekennzeichnet, dass in der Haftklebemasse der Anteil an Weichmacher zwischen 5 und 15 Gew.-% beträgt, bezogen auf das Gesamtgewicht der Haftklebemasse.

Unter Verwendung der erfindungsgemäßen Haftklebemasse lassen sich somit sowohl einseitig klebende, d.h. einseitige, als auch beidseitig klebende, d.h. doppelseitige Haftklebebänder herstellen. Wird die erfindungsgemäße Haftklebemasse einseitig auf einen permanenten Träger aufgetragen, so ergibt sich ein einseitiges Klebeband. Wird die erfindungsgemäße Haftklebemasse beidseitig auf einen permanenten Träger aufgetragen, so ergibt sich ein doppelseitiges Klebeband. Alternativ lässt sich ein solches einseitiges Haftklebeband auch herstellen, indem die erfindungsgemäße Haftklebemasse auf einen Liner aufgebracht wird, und die sich ergebende Haftklebemasseschicht anschließend auf den permanenten Träger kaschiert wird. Ein solches doppelseitiges Haftklebeband lässt sich alternativ auch herstellen, indem die erfindungsgemäße Haftklebemasse auf einen Liner aufgebracht wird, und die sich ergebende Haftklebemasseschicht anschließend beidseitig auf den permanenten Träger kaschiert wird. Nachdem die erfindungsgemäße Haftklebemasse auf einen Liner aufgebracht worden ist, kann die sich ergebende Haftklebemasseschicht alternativ auf einen weiteren Liner kaschiert werden. Ein solches einschichtiges, beidseitig selbstklebendes Klebeband, d.h. doppelseitiges Klebeband, wird auch als "Transfertape" bezeichnet.

Die Dicke der Haftklebemasse auf dem bahnförmigen Material kann typischerweise zwischen 10 µm und 5000 µm betragen, vorzugsweise beträgt sie zwischen 15 µm und 150 µm. In einem Transfertape beträgt die Dicke der Haftklebemasse außerdem vorzugsweise 800 µm bis 1200 µm. Ein derartiges Transfertape ist, insbesondere nach Vernetzung, vielseitig anwendbar.

Nachfolgend wird die Erfindung durch Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

### Beispiele

Verwendet wurde ein Planetwalzenextruder der Firma Entex Rust & Mitschke mit drei gekoppelten Walzenzylindern, die einen Innendurchmesser von 70 mm aufwiesen. Die ersten beiden Walzenzylinder waren mit jeweils 7 Planetenspindeln bestückt, der nachfolgende Walzenzylinder mit 6 Planetenspindeln, wobei eine der Spindeln die geometrische Form eines Mischelementes aufwies. In der vorliegenden Ausführungsform des Planetwalzenextruders weist das Füllteil eine Förderschnecke auf, auf die das Material dosiert werden kann. Als Temperiermedium für die Zentralspindel und des Einfüllbereichs wurde in den Versuchen jeweils Wasser mit einer Vorlauftemperatur von 15 °C verwendet.

Die eingesetzten Rohstoffe sind wie folgt charakterisiert (Tabelle 1):

**Tabelle 1: eingesetzte Rohstoffe.**

| | Handelsname | Hersteller |
|---|---|---|
| Festes EPDM (Ethylengehalt: 55 Gew-%; ENB-Gehalt: 5,2 Gew.-%, Mooney (ML, 1+4 125°C): 80) | Vistalon ^{®} 6602 | Exxon Mobil |
| Festes EPDM (Ethylengehalt: 57 Gew-%; ENB-Gehalt: 4,5 Gew-%; Mooney (ML, 1+4 125°C): 75) | Royalene ^{®} 563 | Lion Copolymers |
| Flüssiges EPDM (Gew.-Verhältnis Ethylen/Propylen: 46:54, ENB-Gehalt: 9,5 Gew.-%) | Trilene ^{®} 67 | Lion Copolymers |
| Hydriertes Kohlenwasserstoffharz (Erweichungstemperatur: 100°C) | Regalite ^{®} R 1100 | Eastman |
| Trimethylolpropantriacrylat (TMPTA) | | Sigma-Aldrich |
| Weißöl (paraffinischnapthenisches Mineralöl) | Ondina ^{®} 933 | Shell |
| Benzin 60-95 | Exxsol ^{®} DSP 60/95 SH | Exxon Mobil |

### Vergleichsbeispiel 1:

Der feste EPDM-Kautschuk Vistalon ^{®} 6602 in einer Menge von 4,0 kg/h und eine erste Klebharzfraktion in Form von 37,5 phr festem raumtemperiertem Regalite R ^{®} 1100 (d.h. die zugegebene Menge an Regalite R ^{®} 1100 betrug 1,5 kg/h) wurden über einen Trichter in den Füllteil des Planetwalzenextruders aufgegeben. Die Wandungstemperatur der Walzenzylinder des Planetwalzenextruders betrug 120 °C. Die Zentralspindel wurde mit einer Geschwindigkeit von 30 Umdrehungen pro Minute angetrieben. Die Mischung wurde aus dem Füllteil in den Compoundierteil übergeben. Über einen Seitenbeschicker im zweiten Walzenzylinder wurde mittels Schlauchpumpe das niedrigviskose Weißöl Ondina ^{®} 933 mit 1,5 kg/h zugegeben. Die restliche Harzmenge Regalite R ^{®} 1100 (75 phr) wurde aufgeschmolzen (Tanktemperatur 130°C) in den 2. Anlaufring zwischen zweitem und drittem Walzenzylinder mit einem Durchsatz von 3,0 kg/h zudosiert. Die sich ergebende Haftklebemasse wies am Austritt des Planetwalzenextruders eine Temperatur von 120 °C auf.

Die Haftklebemasse wurde anschließend zu einer Schichtdicke von 50 µm auf einen 23 µm dicken mit Trichloressigsäure geätzten PET-Träger ausgeformt, so dass sich ein einseitiges Klebeband ergab. Die Beschichtung des PET-Trägers erfolgte dabei mit einem 3-Walzenauftragswerk aus zwei Masseauftragswalzen und einer Kühlwalze, wobei die erste Masseauftragswalze eine Temperatur von 140 °C aufwies, die zweite Masseauftragswalze eine Temperatur von 120 °C aufwies und die Kühlwalze eine Temperatur von weniger als 10 °C aufwies. Anschließend wurde der Verbund mit Trennpapier abgedeckt.

Zur Prüfung auf Homogenität wurden etwa 5 g der Haftklebemasse nach Austritt aus dem Planetwalzenextruder entnommen und zwischen zwei Prozesslinern mithilfe einer Heißpresse bei 110°C und 5 bar Druck verpresst. Als Prozessliner wurden dabei beidseitig mit unterschiedlich abgestuften Silikonsystemen beschichtete PET-Folien einer Dicke von 75 µm eingesetzt. Nach dem Abkühlen wurde der Pressling auseinandergezogen, so dass sich eine Dicke der Haftklebemasseschicht von etwa 50 µm ergab. Die Schicht wurde vor eine Lampe gehalten, wobei auf einer Fläche von 100 cm² mit dem Auge weder unaufgeschlossene Kautschuk-Partikel, noch nicht eingearbeitete schmierende Komponenten zu sehen waren. Die Haftklebemasse war somit homogen.

### Vergleichsbeispiel 2:

Der feste EPDM-Kautschuk Vistalon ^{®} 6602 in einer Menge von 2,9 kg/h und eine erste Klebharzfraktion in Form von 46,9 phr festem raumtemperiertem Regalite R ^{®} 1100 (d.h. die zugegebene Menge an Regalite R ^{®} 1100 betrug 1,36 kg/h) wurden über einen Trichter in den Füllteil des Planetwalzenextruders aufgegeben. Die Wandungstemperatur der Walzenzylinder des Planetwalzenextruders betrug 120 °C. Die Zentralspindel wurde mit einer Geschwindigkeit von 30 Umdrehungen pro Minute angetrieben. Im Einspritzring wurde mittels Tankschmelze der flüssige EPDM-Kautschuk Trilene ^{®} 67 zudosiert, zur besseren Verarbeitung wurde der Tank auf 120°C geheizt, der Durchsatz betrug 2,0 kg/h. Über einen Seitenbeschicker im zweiten Walzenzylinder wurde mittels Schlauchpumpe das niedrigviskose Weißöl Ondina ^{®} 933 (Durchsatz 1,0 kg/h) als Mischung mit TMPTA (Durchsatz 0,1 kg/h) unter Rühren zugegeben. Die restliche Harzmenge Regalite R ^{®} 1100 (93,8 phr) wurde aufgeschmolzen (Tanktemperatur 130°C) in den 2. Anlaufring zwischen zweitem und drittem Walzenzylinder mit einem Durchsatz von 2,72 kg/h zudosiert. Die sich ergebende Haftklebemasse wies am Austritt des Planetwalzenextruders eine Temperatur von 120 °C auf.

Im analog zu Vergleichsbeispiel 1 durchgeführten Test auf Homogenität waren in der Haftklebemasseschicht mit dem Auge zahlreiche deutlich sichtbare unaufgeschlossene Kautschuk-Partikel zu erkennen. Ferner schwamm der Kautschuk in den schmierenden Komponenten, d.h. es waren nicht eingearbeitete schmierende Komponenten wie Klebharz zu sehen. Die Haftklebemasse wies somit eine sehr schlechte Homogenität auf. Dementsprechend konnte kein bewertbares einseitiges Klebeband analog der Vorschrift aus Vergleichsbeispiel 1 hergestellt werden.

### Beispiel 3:

Beispiel 3 unterscheidet sich von Vergleichsbeispiel 2 darin, dass der feste EPDM-Kautschuk Vistalon ^{®} 6602 vor der Aufgabe in das Füllteil des Planetwalzenextruders in einem Einschneckenextruder (Blaake Einschneckenextruder ES45/25D) bei 190 °C aufgeschmolzen wurde und somit als Schmelze in den Planetwalzenextruder aufgegeben wurde. Zudem wurde die gesamte Harzmenge Regalite R ^{®} 1100 (140,6 phr) aufgeschmolzen (Tanktemperatur 130°C) in den 2. Anlaufring zwischen zweitem und drittem Walzenzylinder mit einem Durchsatz von 4,0 kg/h zudosiert, d.h. es wurde kein Klebharz in den Füllteil des Planetwalzenextruders aufgegeben. Die Wandungstemperatur der Walzenzylinder des Planetwalzenextruders betrug 140°C. Die Zentralspindel wurde mit einer Geschwindigkeit von 45 Umdrehungen pro Minute angetrieben. Die sich ergebende Haftklebmasse wies am Austritt des Planetwalzenextruders eine Temperatur von 100°C auf. Alle weiteren Angaben sind entsprechend Vergleichsbeispiel 2.

Aus der Haftklebemasse wurde anschließend wie in Vergleichsbeispiel 1 beschrieben ein einseitiges Klebeband hergestellt.

Im analog zu Vergleichsbeispiel 1 durchgeführten Test auf Homogenität waren in der Haftklebemasse mit dem Auge weder unaufgeschlossene Kautschuk-Partikel, noch nicht eingearbeitete schmierende Komponenten zu sehen. Die Haftklebemasse war somit homogen.

### Vergleichsbeispiele 4:

Es wurde eine Haftklebemasse mit der gleichen Zusammensetzung wie in Beispiel 3 hergestellt, allerdings mittels des Lösungsmittelverfahrens. Dabei wurden alle Bestandteile als lösungsmittelbasierte Masse in einem Kneter mit Doppelsigmaknethaken homogenisiert. Als Lösungsmittel wurde Benzin 60-95 verwendet. Der Kneter wurde dabei mittels Wasserkühlung gekühlt. In einem ersten Schritt wurde zunächst der feste EPDM-Kautschuk Vistalon ^{®} 6602 mit einem Drittel des insgesamt zu verwendenden Benzin 60-95 versetzt und für 12 Stunden bei 23 °C vorgequollen. Anschließend wurde dieser sogenannte Vorbatch für 15 Minuten geknetet. Anschließend wurde das Klebharz Regalite R 1100 in drei Portionen zugegeben und jeweils 20 min homogen geknetet. Anschließend wurde das Trilene ^{®} 67 zugegeben und für 10 min homogen geknetet. Danach wurde das Ondina ^{®} 933 zusammen mit TMPTA zugegeben und für 10 min homogen geknetet. Die Haftklebemasse wurde durch Zugabe von Benzin auf eine 32 Gew.-%ige Lösung eingestellt.

Die sich ergebende Haftklebemasse wurde anschließend auf einem handelsüblichen Laborstreichtisch (zum Beispiel von der Firma SMO (Sondermaschinen Oschersleben GmbH)) mit Hilfe eines Streichmessers auf einen 23 µm dicken mit Trichloressigsäure geätzten PET-Träger beschichtet. Das Lösungsmittel wurde bei 105 °C im Umlufttrockenschrank für 10 Minuten abgedampft und somit die Haftklebemasse getrocknet. Die Spaltbreite beim Beschichten wurde so eingestellt, dass nach dem Abdampfen des Lösungsmittels eine Dicke der Haftklebemassenschicht von 50 µm erreicht wurde. Es ergab sich ein einseitiges Klebeband.

Im analog zu Vergleichsbeispiel 1 durchgeführten Test auf Homogenität waren in der Haftklebemasse mit dem Auge weder unaufgeschlossene Kautschuk-Partikel, noch nicht eingearbeitete schmierende Komponenten zu sehen. Die Haftklebemasse war somit homogen.

### Beispiel 5:

Beispiel 5 unterscheidet sich von Beispiel 3 lediglich darin, dass als fester EPDM-Kautschuk anstelle von Vistalon ^{®} 6602 der insbesondere durch einen höheren Ethylengehalt und somit höheren kristallinen Anteil gekennzeichnete Kautschuk Royalene ^{®} 563 eingesetzt wurde, bei gleichem Anteil. Alle weiteren Angaben sind entsprechend Beispiel 3. Auch wurde aus der Haftklebemasse anschließend wie in Vergleichsbeispiel 1 beschrieben ein einseitiges Klebeband hergestellt.

Im analog zu Vergleichsbeispiel 1 durchgeführten Test auf Homogenität waren in der Haftklebemasse mit dem Auge weder unaufgeschlossene Kautschuk-Partikel, noch nicht eingearbeitete schmierende Komponenten zu sehen. Die Haftklebemasse war somit homogen.

### Vergleichsbeispiel 6:

Es sollte eine Haftklebemasse mit der gleichen Zusammensetzung wie in Beispiel 5 hergestellt werden, allerdings mittels des Lösungsmittelverfahrens. Aufgrund der hohen Kristallinität des festen EPDM-Kautschuks Royalene ^{®} 563 war jedoch keine Verarbeitung mit Lösungsmitteln möglich, Royalene ^{®} 563 konnte nicht gelöst werden. Dementsprechend konnte kein bewertbares einseitiges Klebeband analog der Vorschrift aus Vergleichsbeispiel 4 hergestellt werden.

### Ergebnisse:

Die Rezepturen und Ergebnisse der erfindungsgemäßen Beispiele und Vergleichsbeispiele sind in der Tabelle 2 zusammengefasst. Prozentangaben sind jeweils als Gewichtsprozent zu verstehen.

Beispiel 3 zeigt, dass sich über das erfindungsgemäße Extrusionsverfahren auf lösungsmittelfreiem Weg Haftklebemassen auf Basis von festem EPDM-Kautschuk bereitstellen lassen, die homogen sind und gleichzeitig eine hohe Klebkraft auf Untergründen verschiedener Polarität wie zum Beispiel Stahl und Polypropylen aufweisen (die Klebkräfte wurden in den (Vergleichs-)Beispielen jeweils am einseitigen Klebeband ermittelt, das wie in den (Vergleichs-)Beispielen beschrieben hergestellt wurde).

Ein Vergleich mit Vergleichsbeispiel 2, bei dem der feste EPDM-Kautschuk nicht als Schmelze in den Füllteil des Planetwalzenextruders aufgegeben wird, zeigt, dass das vorherige Aufschmelzen des festen EPDM-Kautschuks wesentlich ist, um bei verschiedenen und somit auch bei verhältnismäßig geringen Anteilen an festem EPDM-Kautschuk Haftklebemassen hervorzubringen, die homogen sind. Aufgrund der fehlenden Homogenität der Haftklebemasse aus Vergleichsbeispiel 2 konnte daraus kein bewertbares einseitiges Klebeband hergestellt werden, so dass auch keine Klebkräfte ermittelt werden konnten.

**Tabelle 2: Rezepturen und Ergebnisse der erfindungsgemäßen Beispiele und Vergleichsbeispiele.**

| | **Bsp. 1^{a}** | **Bsp. 2^{a}** | **Bsp. 3^{b}** | **Bsp. 4^{a}** | **Bsp. 5^{b}** | **Bsp. 6^{a}** |
|---|---|---|---|---|---|---|
| Verfahren | Extrusion | Extrusion | Extrusion | Lösungsmittel | Extrusion | Lösungsmittel |
| Rezepturen | | | | | | |
| Vistalon ^{®} 6602 | 40% | 28,8% | 28,8% | 28,8% | | |
| Royalene ^{®} 563 | | | | | 28,8% | 28,8% |
| Trilene ^{®} 67 | | 19,8% | 19,8% | 19,8% | 19,8% | 19,8% |
| Regalite ^{®} R 1100 | 45% | 40,5% | 40,5% | 40,5% | 40,5% | 40,5% |
| Ondina ^{®} 933 | 15% | 9,9% | 9,9% | 9,9% | 9,9% | 9,9% |
| TMPTA | | 1,0% | 1,0% | 1,0% | 1,0% | 1,0% |
| Anteil festes EPDM | 40% | 29% | 29%^{c} | 29% | 40%^{c} | 40% |
| SchmierAnteil^{d} | 60% | 71% | 71% | | 60% | 60% |

| Ergebnisse | | | | | | |
|---|---|---|---|---|---|---|
| Homogenität | + | - | + | + | + | - |
| Klebkraft Stahl [N/cm] | 5,4 | | 12,0 | 14,0 | 13,9 | |
| Klebkraft PP [N/cm] | 11,9 | | 15,4 | 10,4 | 9,9 | |
| Mikroscherweg [µm] | 134 | | 308 | 268 | 468 | |
| SAFT [°C] | 120 | | 94 | 97 | 86 | |

| | | | | | | |
|---|---|---|---|---|---|---|
| ^{a}:Vergleichsbeispiele; ^{b}: erfindungsgemäße Beispiele; ^{c}:aufgeschmolzen im Einschneckenextruder; ^{d}: Schmieranteil = Anteil schmierender Komponenten | | | | | | |

Vergleichsbeispiel 1 zeigt wiederum, dass sich über das Extrusionsverfahren auch ohne vorheriges Aufschmelzen des festen EPDM-Kautschuks zwar homogene Haftklebemassen herstellen lassen, sofern der Anteil an festem EPDM-Kautschuk ausreichend hoch gewählt wird. Allerdings ergeben sich in diesem Fall deutlich geringere Klebkräfte auf Untergründen verschiedener Polarität, verglichen mit verhältnismäßig geringen Anteilen an festem EPDM-Kautschuk (vgl. die Klebkräfte aus Vergleichsbeispiel 1 und Beispiel 3).

Ein Vergleich von Beispiel 3 mit Vergleichsbeispiel 4 zeigt zudem, dass das erfindungsgemäße Extrusionsverfahren Haftklebemassen bereitstellt, deren Klebkräfte auf Untergründen verschiedener Polarität mit den Klebkräften von Haftklebemassen vergleichbar sind, die mittels des Lösungsmittelverfahrens hergestellt worden sind (bei identischer Rezeptur). Wie vorstehend beschrieben eignet sich das Extrusionsverfahren allerdings im Gegensatz zum Lösungsmittelverfahren gut zur Herstellung von Haftklebemasseschichten unterschiedlicher Dicken, insbesondere auch hoher Dicken. Ferner entfällt aufwändiges Trocknen bei der Herstellung.

Ein Vergleich des erfindungsgemäßen Beispiels 5 mit Vergleichsbeispiel 6 zeigt zudem, dass das erfindungsgemäße Verfahren im Gegensatz zum Lösungsmittelverfahren auch die Herstellung von homogenen Haftklebemassen auf Basis von festem EPDM-Kautschuk ermöglicht, der einen verhältnismäßig hohen Ethylengehalt, wie insbesondere von mehr als 55 bis 62 Gew.-%, aufweist. Wie Beispiel 5 zeigt, lassen sich homogene Haftklebemassen auf Basis teilkristallinen festen EPDMs durch das erfindungsgemäße Verfahren sogar dann erzielen, wenn der Anteil an festem EPDM verhältnismäßig gering ist.

Die TMPTA-haltigen erfindungsgemäßen Haftklebemassen aus den Beispielen 3 und 5 können optional mittels Elektronenstrahlen vernetzt werden, wodurch die (Wärme-)Scherfestigkeit weiter erhöht werden kann.

### Prüfmethoden

Alle Messungen wurden, sofern nichts anderes angegeben ist, bei 23 °C und 50 % rel. Luftfeuchtigkeit durchgeführt. Die mechanischen und klebtechnischen Daten wurden wie folgt ermittelt:

### Erweichungspunkt T_{E}

Die Angaben zum Erweichungspunkt T_{E}, auch Erweichungstemperatur genannt, insbesondere von oligomeren Verbindungen, polymeren Verbindungen bzw. Harzen beziehen sich auf das Ring-Kugel-Verfahren gemäß DIN EN 1427:2007 bei entsprechender Anwendung der Bestimmungen (Untersuchung der Oligomer- Polymer- bzw. Harzprobe statt Bitumens bei ansonsten beibehaltener Verfahrensführung); die Messungen erfolgen im Glycerolbad.

### Glasübergangstemperatur (T_{g})

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

### Dicke

Die Dicke einer Klebemasseschicht kann durch Bestimmung der Dicke eines bezüglich seiner Länge und seiner Breite definierten Abschnitts einer solchen auf einen Träger aufgetragenen Klebemassenschicht bestimmt werden, abzüglich der (bekannten oder separat ermittelbaren) Dicke eines Abschnitts gleicher Dimensionen des verwendeten Trägers. Die Dicke der Klebemasseschicht lässt sich über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### 180 ° Klebkraft

Die Prüfung der Schälfestigkeit (Klebkraft) erfolgt in Anlehnung an PSTC-1.

Ein 2,0 cm breiter Streifen eines Haftklebebandes wird auf dem Prüfuntergrund in Form einer ASTM-Stahlplatte durch fünfmaliges doppeltes Überrollen mittels einer 4 kg Rolle verklebt.

Die Oberfläche der Stahlplatte wird zuvor mit Aceton gereinigt. Die Platte wird eingespannt, und der Haftklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse werden über drei Messungen gemittelt und normiert auf die Breite des Streifens in N/cm angegeben.

Die Klebkraft auf alternativen Substraten (bspw. Polypropylen (PP) oder Polyethylen (PE)) wird entsprechend der obigen Methodik durch Wechsel des Verklebungssubstrates bestimmt. Die Substratuntergründe Polyethylen und -propylen werden vor der Verwendung mit Ethanol gereinigt und für 2 h im Prüfklima konditioniert.

### Molgewicht M_{w}

Das gewichtsmittlere Molgewicht M_{w} des flüssigen EPDM-Kautschuks wird mittels Gelpermeationschromatographie (GPC) bestimmt. Als Eluent wird THF mit 0,1 Vol.-% Trifluoressigsäure eingesetzt. Die Messung erfolgt bei 25°C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁵ und 10⁶ mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Å = 10⁻¹⁰ m).

## Patentansprüche

1. Verfahren zur kontinuierlichen und lösungsmittelfreien Herstellung einer Haftklebemasse auf Basis von festem EPDM-Kautschuk in einem kontinuierlich arbeitenden Aggregat in Form eines Planetwalzenextruders mit einem Füllteil und einem Compoundierteil, wobei der Compoundierteil aus mindestens zwei gekoppelten Walzenzylindern besteht, bei dem
a) der feste EPDM-Kautschuk und gegebenenfalls weitere Komponenten in den Füllteil des Planetwalzenextruders aufgegeben werden,
b) die Komponenten aus dem Füllteil in den Compoundierteil übergeben werden,
c) flüssiger EPDM-Kautschuk, Weichmacher, Klebharz und gegebenenfalls weitere Komponenten dem Compoundierteil zugegeben werden, und
d) die sich ergebende Haftklebemasse ausgetragen wird,
**dadurch gekennzeichnet, dass**
der feste EPDM-Kautschuk als Schmelze in den Füllteil aufgegeben wird.

2. Verfahren nach Anspruch 1,
**dadurch gekennzeichnet, dass**
der feste EPDM-Kautschuk
(i) zu 30 bis 80 Gew.-%, bevorzugter 40 bis 75 Gew.-%,noch bevorzugter 45 bis 70 Gew.-%, insbesondere 55 bis 65 Gew.-%, wie zum Beispiel größer 55 bis 62 Gew.-%, aus Ethylen aufgebaut ist,
und/oder
(ii) zu 20 bis 60 Gew.-%, vorzugsweise 30 bis 50 Gew.-%, aus Propylen aufgebaut ist, und/oder
(iii) zu bis zu 20 Gew.-%, bevorzugter 2 bis 12 Gew.-%, insbesondere 5 bis 10 Gew.-%, aus Dien aufgebaut ist,
jeweils bezogen auf das Gesamtgewicht der zugrunde liegenden Monomerzusammensetzung.

3. Verfahren nach einem der vorhergehenden Ansprüche,
**dadurch gekennzeichnet, dass**
der feste EPDM-Kautschuk neben Ethylen und Propylen als Dien Ethyliden-Norbornen (ENB), Dicyclopentadien oder 1,4- Hexadien enthält.

4. Verfahren nach einem der vorhergehenden Ansprüche,
**dadurch gekennzeichnet, dass**
die Mooney-Viskosität (ML 1 + 4/125 °C) des festen EPDM-Kautschuks gemessen gemäß DIN 53523 mindestens 20 bis 120, bevorzugt 40 bis 90 und insbesondere 50 bis 80 beträgt.

5. Verfahren nach einem der vorhergehenden Ansprüche,
**dadurch gekennzeichnet, dass**
in der Haftklebemasse der Anteil an festem EPDM-Kautschuk mindestens 15 Gew.-% beträgt, vorzugsweise 20 bis 45 Gew.-%, insbesondere 25 bis weniger als 40 Gew.-%, wie zum Beispiel 28 bis 35 Gew.-%, bezogen auf das Gesamtgewicht der Haftklebemasse.

6. Verfahren nach einem der vorhergehenden Ansprüche,
**dadurch gekennzeichnet, dass**
der flüssige EPDM-Kautschuk zu 30 bis 70 Gew.-%, bevorzugter 40 bis 68 Gew.-%, aus Ethylen aufgebaut ist, jeweils bezogen auf das Gesamtgewicht der zugrunde liegenden Monomerzusammensetzung.

7. Verfahren nach einem der vorhergehenden Ansprüche,
**dadurch gekennzeichnet, dass** das gewichtsmittlere Molgewicht des flüssigen EPDM-Kautschuks M_{w} ≤ 100.000 Da, vorzugsweise ≤ 50.000 Da, bevorzugter ≤ 30.000 Da und insbesondere ≤ 20.000 Da beträgt.

8. Verfahren nach einem der vorhergehenden Ansprüche,
**dadurch gekennzeichnet, dass**
in der Haftklebemasse der Anteil an flüssigem EPDM-Kautschuk bis zu 30 Gew.-% beträgt, vorzugsweise 10 bis 20 Gew.-%, bezogen auf das Gesamtgewicht der Haftklebemasse.

9. Verfahren nach einem der vorhergehenden Ansprüche,
**dadurch gekennzeichnet, dass**
der Weichmacher Weißöl ist.

10. Verfahren nach einem der vorhergehenden Ansprüche,
**dadurch gekennzeichnet, dass**
in der Haftklebemasse der Anteil an Weichmacher bis zu 20 Gew.-%, vorzugsweise zwischen 5 und 15 Gew.-% beträgt, bezogen auf das Gesamtgewicht der Haftklebemasse.

11. Verfahren nach einem der vorhergehenden Ansprüche,
**dadurch gekennzeichnet, dass**
die Haftklebemasse 30 bis 180 phr, 90 bis 170 phr, vorzugsweise 100 bis 160 phr Klebharz enthält.

12. Verfahren nach einem der vorhergehenden Ansprüche,
**dadurch gekennzeichnet, dass**
die Haftklebemasse nach dem Austragen aus dem Planetwalzenextruder auf ein bahnförmiges Material beschichtet wird.

13. Verfahren nach Anspruch 12,
**dadurch gekennzeichnet, dass**
die Haftklebemasse in einem der Beschichtung nachfolgenden Schritt vernetzt wird, wobei die Haftklebemasse vorzugsweise mittels Elektronenstrahlen vernetzt wird.

14. Haftklebemasse, die gemäß einem Verfahren nach einem der Ansprüche 1 bis 13 erhältlich ist,
**dadurch gekennzeichnet, dass**
in der Haftklebemasse der Anteil an Weichmacher zwischen 5 und 15 Gew.-% beträgt, bezogen auf das Gesamtgewicht der Haftklebemasse.

15. Haftklebemasse auf Basis von festem EPDM-Kautschuk, die flüssigen EPDM-Kautschuk, Weichmacher und Klebharz enthält,
**dadurch gekennzeichnet, dass**
der feste EPDM-Kautschuk zu 55 bis 75 Gew.-%, vorzugsweise 55 bis 65 Gew.-%, wie zum Beispiel größer 55 bis 62 Gew.-%, aus Ethylen aufgebaut ist, bezogen auf das Gesamtgewicht der zugrunde liegenden Monomerzusammensetzung, und
in der Haftklebemasse der Anteil an Weichmacher zwischen 5 und 15 Gew.-% beträgt, bezogen auf das Gesamtgewicht der Haftklebemasse.

16. Haftklebemasse nach Anspruch 14 oder 15,
**dadurch gekennzeichnet, dass**
die Haftklebemasse 100 bis 160 phr Klebharz enthält.

17. Haftklebeband, das mindestens eine Schicht aus einer Haftklebemasse nach einem der Ansprüche 14 bis 16 umfasst.

## Claims

1. Process for the continuous and solvent-free production of a pressure-sensitive adhesive based on solid EPDM rubber in a continuously operating assembly in the form of a planetary roller extruder having a filling section and a compounding section, the compounding section consisting of at least two coupled roller cylinders, by
a) feeding the solid EPDM rubber and any further components into the filling section of the planetary roller extruder,
b) transferring the components from the filling section into the compounding section,
c) adding liquid EPDM rubber, plasticizer, tackifier resin, and any further components to the compounding section, and
d) discharging the resultant pressure-sensitive adhesive,
**characterized in that**
the solid EPDM rubber is fed as a melt into the filling section.

2. Process according to Claim 1,
**characterized in that**
the solid EPDM rubber
(i) is composed to an extent of 30 to 80 wt%, more preferably 40 to 75 wt%, more preferably still 45 to 70 wt%, more particularly 55 to 65 wt%, such as for example greater than 55 to 62 wt%, of ethylene,
and/or
(ii) is composed to an extent of 20 to 60 wt%, preferably 30 to 50 wt%, of propylene, and/or
(iii) is composed to an extent of up to 20 wt%, more preferably 2 to 12 wt%, more particularly 5 to 10 wt%, of diene,
based in each case on the total weight of the parent monomer composition.

3. Process according to either of the preceding claims,
**characterized in that**
the solid EPDM rubber as well as ethylene and propylene comprises as diene ethylidene-norbornene (ENB), dicyclopentadiene or 1,4-hexadiene.

4. Process according to any of the preceding claims, **characterized in that**
the Mooney viscosity (ML 1 + 4/125°C) of the solid EPDM rubber as measured according to DIN 53523 is at least 20 to 120, preferably 40 to 90, and more particularly 50 to 80.

5. Process according to any of the preceding claims, **characterized in that**
the fraction of solid EPDM rubber in the pressure-sensitive adhesive is at least 15 wt%, preferably 20 to 45 wt%, more particularly 25 to less than 40 wt%, such as for example 28 to 35 wt%, based on the total weight of the pressure-sensitive adhesive.

6. Process according to any of the preceding claims, **characterized in that**
the liquid EPDM rubber is composed to an extent of 30 to 70 wt%, more preferably 40 to 68 wt%, of ethylene, based in each case on the total weight of the parent monomer composition.

7. Process according to any of the preceding claims, **characterized in that** the weight-average molar weight of the liquid EPDM rubber, M_{w}, is ≤ 100 000 Da, preferably ≤ 50 000 Da, more preferably ≤ 30 000 Da, and more particularly ≤ 20 000 Da.

8. Process according to any of the preceding claims, **characterized in that**
the fraction of liquid EPDM rubber in the pressure-sensitive adhesive is up to 30 wt%, preferably 10 to 20 wt%, based on the total weight of the pressure-sensitive adhesive.

9. Process according to any of the preceding claims, **characterized in that**
the plasticizer is white oil.

10. Process according to any of the preceding claims, **characterized in that**
the fraction of plasticizer in the pressure-sensitive adhesive is up to 20 wt%, preferably between 5 and 15 wt%, based on the total weight of the pressure-sensitive adhesive.

11. Process according to any of the preceding claims, **characterized in that**
the pressure-sensitive adhesive comprises 30 to 180 phr, 90 to 170 phr, preferably 100 to 160 phr of tackifier resin.

12. Process according to any of the preceding claims, **characterized in that**
the pressure-sensitive adhesive after discharge from the planetary roller extruder is coated onto a material in web form.

13. Process according to Claim 12,
**characterized in that**
the pressure-sensitive adhesive is crosslinked in a step downstream of the coating operation, the pressure-sensitive adhesive being crosslinked preferably by means of electron beams.

14. Pressure-sensitive adhesive which is obtainable by a process according to any of Claims 1 to 13, **characterized in that**
the fraction of plasticizer in the pressure-sensitive adhesive is between 5 and 15 wt%, based on the total weight of the pressure-sensitive adhesive.

15. Pressure-sensitive adhesive based on solid EPDM rubber, which comprises liquid EPDM rubber, plasticizer, and tackifier resin,
**characterized in that**
the solid EPDM rubber is composed to an extent of 55 to 75 wt%, preferably 55 to 65 wt%, such as for example greater than 55 to 62 wt%, of ethylene, based on the total weight of the parent monomer composition, and
the fraction of plasticizer in the pressure-sensitive adhesive is between 5 and 15 wt%, based on the total weight of the pressure-sensitive adhesive.

16. Pressure-sensitive adhesive according to Claim 14 or 15,
**characterized in that**
the pressure-sensitive adhesive comprises 100 to 160 phr of tackifier resin.

17. Pressure-sensitive adhesive tape which comprises at least one layer of a pressure-sensitive adhesive according to any of Claims 14 to 16.

## Revendications

1. Procédé de fabrication continue et sans solvant d'une masse adhésive de contact à base de caoutchouc EPDM solide dans un ensemble travaillant en continu sous la forme d'une extrudeuse à rouleaux planétaires munie d'une partie de remplissage et d'une partie de compoundage, la partie de compoundage étant constituée d'au moins deux cylindres de laminage couplés, selon lequel
a) le caoutchouc EPDM solide et éventuellement d'autres composants sont placés dans la partie de remplissage de l'extrudeuse à rouleaux planétaires,
b) les composants sont transférés de la partie de remplissage dans la partie de compoundage,
c) du caoutchouc EPDM liquide, du plastifiant, de la résine adhésive et éventuellement d'autres composants sont ajoutés à la partie de compoundage, et
d) la masse adhésive de contact obtenue est déchargée,
**caractérisé en ce que**
le caoutchouc EPDM solide est placé dans la partie de remplissage sous la forme d'une masse fondue.

2. Procédé selon la revendication 1,
**caractérisé en ce que**
le caoutchouc EPDM solide
(i) est formé par 30 à 80 % en poids, de manière davantage préférée 40 à 75 % en poids, de manière encore davantage préférée 45 à 70 % en poids, notamment 55 à 65 % en poids, tel que par exemple plus de 55 à 62 % en poids, d'éthylène,
et/ou
(ii) est formé par 20 à 60 % en poids, de préférence 30 à 50 % en poids, de propylène, et/ou
(iii) est formé par jusqu'à 20 % en poids, de manière davantage préférée 2 à 12 % en poids, notamment 5 à 10 % en poids, de diène,
à chaque fois par rapport au poids total de la composition de monomères sous-jacente.

3. Procédé selon l'une quelconque des revendications précédentes,
**caractérisé en ce que**
le caoutchouc EPDM solide contient, outre de l'éthylène et du propylène, de l'éthylidène-norbornène (ENB), du dicyclopentadiène ou du 1,4-hexadiène en tant que diène.

4. Procédé selon l'une quelconque des revendications précédentes,
**caractérisé en ce que**
la viscosité de Mooney (ML 1 + 4/125 °C) du caoutchouc EPDM solide mesurée selon DIN 53523 est d'au moins 20 à 120, de préférence 40 à 90 et notamment 50 à 80.

5. Procédé selon l'une quelconque des revendications précédentes,
**caractérisé en ce que**
dans la masse adhésive de contact, la proportion de caoutchouc EPDM solide est d'au moins 15 % en poids, de préférence 20 à 45 % en poids, notamment 25 à moins de 40 % en poids, tel que par exemple 28 à 35 % en poids, par rapport au poids total de la masse adhésive de contact.

6. Procédé selon l'une quelconque des revendications précédentes,
**caractérisé en ce que**
le caoutchouc EPDM liquide est formé par 30 à 70 % en poids, de manière davantage préférée 40 à 68 % en poids, d'éthylène, à chaque fois par rapport au poids total de la composition de monomères sous-jacente.

7. Procédé selon l'une quelconque des revendications précédentes,
**caractérisé en ce que**
le poids moléculaire moyen en poids du caoutchouc EPDM liquide M_{w} est ≤ 100 000 Da, de préférence ≤ 50 000 Da, de manière davantage préférée ≤ 30 000 Da et notamment ≤ 20 000 Da.

8. Procédé selon l'une quelconque des revendications précédentes,
**caractérisé en ce que**
dans la masse adhésive de contact, la proportion de caoutchouc EPDM liquide est de jusqu'à 30 % en poids, de préférence de 10 à 20 % en poids, par rapport au poids total de la masse adhésive de contact.

9. Procédé selon l'une quelconque des revendications précédentes,
**caractérisé en ce que**
le plastifiant est de l'huile blanche.

10. Procédé selon l'une quelconque des revendications précédentes,
**caractérisé en ce que**
dans la masse adhésive de contact, la proportion de plastifiant est de jusqu'à 20 % en poids, de préférence comprise entre 5 et 15 % en poids, par rapport au poids total de la masse adhésive de contact.

11. Procédé selon l'une quelconque des revendications précédentes,
**caractérisé en ce que**
la masse adhésive de contact contient 30 à 180 pce, 90 à 170 pce, de préférence 100 à 160 pce de résine adhésive.

12. Procédé selon l'une quelconque des revendications précédentes,
**caractérisé en ce que**
la masse adhésive de contact est revêtue sur un matériau en forme de bande après le déchargement hors de l'extrudeuse à rouleaux planétaires.

13. Procédé selon la revendication 12,
**caractérisé en ce que**
la masse adhésive de contact est réticulée dans une étape suivant le revêtement, la masse adhésive de contact étant de préférence réticulée au moyen de faisceaux d'électrons.

14. Masse adhésive de contact, qui peut être obtenue par un procédé selon l'une quelconque des revendications 1 à 13,
**caractérisé en ce que**
dans la masse adhésive de contact, la proportion de plastifiant est comprise entre 5 et 15 % en poids, par rapport au poids total de la masse adhésive de contact.

15. Masse adhésive de contact à base de caoutchouc EPDM solide, qui contient du caoutchouc EPDM liquide, du plastifiant et de la résine adhésive,
**caractérisée en ce que**
le caoutchouc EPDM solide est formé par 55 à 75 % en poids, de préférence 55 à 65 % en poids, tel que par exemple plus de 55 à 62 % en poids, d'éthylène, par rapport au poids total de la composition de monomères sous-jacente, et
dans la masse adhésive de contact, la proportion de plastifiant est comprise entre 5 et 15 % en poids, par rapport au poids total de la masse adhésive de contact.

16. Masse adhésive de contact selon la revendication 14 ou 15,
**caractérisée en ce que**
la masse adhésive de contact contient 100 à 160 pce de résine adhésive.

17. Bande adhésive de contact, qui comprend au moins une couche en une masse adhésive de contact selon l'une quelconque des revendications 14 à 16.
